# EUROPEAN PATENT APPLICATION

(11) **EP 4 635 931 A1**
(43) Date of publication of application: **22.10.2025**
(21) Application number: 25168124.3
(22) Date of filing: 02.04.2025
(51) Int. Cl.: C04B 28/04, C04B 14/06

(54) **COMPOSITION FOR PREPARING MORTAR**

(30) Priority: 04.04.2024 IT 202400007501
(71) Applicant: Gladiatore Costruzioni Società a Responsabilità Limitata, 00071 Pomezia RM (IT)
(72) Inventor: PIOZZI, Marco Alessio, 00071 Pomezia RM (IT)
(74) Representative: Santoro, Sofia

(57) **Abstract**

The present invention relates to a composition for making mortar as well as to a process for preparing mortar and related uses of mortar obtainable by means of the afore-mentioned process, in particular for preventing the formation of moisture or mould, on a surface of a substrate.

## Description

### Technical field

The present invention relates to a composition for making mortar as well as to a process for the preparation of mortar and related uses of mortar obtainable by said process, in particular for preventing the formation of moisture or mould on a surface of a substrate.

### State of the art

Dampness is an insidious problem for the wellbeing of old and new buildings, as it can compromise the structure of buildings and the healthiness of environments, as well as the wellbeing of people. In particular, rising damp is a phenomenon that occurs when water from the ground rises up the building, due to a lack of or inadequate waterproofing of the structures in contact with it.

This phenomenon can be particularly damaging if it is accompanied by the presence of salts, as the combination of these two factors is often detrimental to the durability of the masonry concerned and can accelerate the formation of efflorescence, microbial growth, mould, plaster degradation, and even the detachment and loss of masonry insulation. Mould growth and bacterial proliferation are particularly critical as they can spread rapidly in the environment, increasing the risk of damage to human health.

Well-known solutions in the sector to counteract these phenomena include specific aeration systems, combined with drains, that allow the complete escape of water from the affected area, as well as the application of dehumidifying mortars, with a formulation that allows for the production of plasters capable of resisting the aggression of salts and rising damp over time.

The mortars currently on the market are, however, mainly intended for use in construction for the finishing of smooth walls and cannot be used for decorative purposes; moreover, they do not provide an effective anti-mould action.

In this context, the need to develop compositions for the production of mortars that can combine high performance in terms of dehumidifying capacity and antimicrobial/anti-mould properties at a low cost and aesthetically pleasing enough to allow them to be used for both decorative and protective applications in the building industry is still very much felt.

### Summary of the invention

The objective underlying the present invention is to provide a new composition for the production of mortar for application in the building, renovation and construction industry, which enables the above-mentioned requirements to be met with reference to the known technique.

In particular, the invention provides a composition for the production of mortar, comprising, alternatively,
- a cement binder compound in an amount by weight, determined with respect to the total weight of the composition, of between 38% and 42%, a granular aggregate in an amount by weight, determined with respect to the total weight of the composition, of between 58% and 63%, and optionally an additive mixture comprising or consisting of one or more fluidifying agents and/or one or more antifreeze agents, in an amount by weight, determined with respect to the total weight of the composition, of between 0.02% and 0.12%;
   or
- a cement binder compound in an amount by weight, determined with respect to the total weight of the composition, between 1% and 4% and a granular aggregate in an amount by weight, determined with respect to the total weight of the composition, between 96% and 99% and optionally an additive mixture comprising or consisting of one or more fluidifying agents and/or one or more antifreeze agents, in an amount by weight, determined with respect to the total weight of the composition, between 0.02% and 0.12%.
   or
- a cement binder compound in an amount by weight, determined with respect to the total weight of the composition, of between 8% and 12% and a granular aggregate in an amount by weight, determined with respect to the total weight of the composition, of between 88% and 92% and optionally a mixture of additives comprising or consisting of one or more fluidizing agents and/or one or more antifreeze agents, in an amount by weight, determined with respect to the total weight of the composition, of between 0.02% and 0.12%. In a preferred embodiment of the invention, the composition contains a cement binding compound comprising at least calcite, alite, belite and portlandite as major components, and quartz sand having a specific particle size distribution in the range of 125 µm to 1000 µm as granular aggregate.

Advantageously, the authors of the present invention have found that the mixing of a composition according to any of the variants described herein with water, preferably with water in an amount by weight of between 20% and 50% and even more preferably of at least 30% of the total weight of the composition used, makes it possible to obtain a mortar capable of exerting an effective anti-mould action, as well as of preventing the formation of dampness or capillary rise of water through the surface of a substrate of interest, in particular an interior or exterior wall of a building.

Surprisingly, the combination of cement binder, granular aggregate and optionally additives in the quantities indicated in this description and in the attached claims, results in mortars with significantly improved breathable and dehumidifying properties compared to mortars prepared from conventional mixtures.

In particular, mortars obtainable from any composition according to the present invention enable a breathable protective barrier to be created on any building surface to which they are applied, preventing the passage of moisture through the surface and helping to keep the interior of buildings dry, healthy and aseptic.

Due to their waterproofing characteristics, the mortars obtainable using a composition according to the present invention therefore constitute an effective barrier against moisture and are particularly effective in preventing structural damage and improving the durability of buildings.

As mentioned, mortars obtainable from any composition according to the invention also possess an optimal ability to prevent the formation of mould and bacteria. This not only contributes to maintaining aesthetically pleasing surfaces, but also to preserving the health of the inhabitants.

A further advantage of compositions according to the present invention is the possibility of producing stain-resistant mortars, which do not require primer and can be applied to all surfaces of interest in the building industry, even wood, allowing application thicknesses from 1 mm up to 3 cm.

By virtue of the advantageous features mentioned above, the mortars obtainable from a composition according to the present invention can be applied to make coatings and/or decorative applications for walls, for shower trays, kitchen tops, as well as any other surface of interest in the building or construction field, in such a way as to make the selected spaces true furnishing complements. Mortars can be applied both indoors and outdoors, offering a complete solution for the protection of a building. Their versatility makes it possible to preserve the aesthetics of interior spaces and improve the durability of exterior structures; they are also easy to clean, customisable and can be easily washed.

Mortars according to the invention can be easily treated or modified using breathable, certified, water-based, single-component resins free of toxic components. Applying resin to mortars beautifies them, preserves their colour and makes the decorative applications achievable with such materials unique. The breathability of resins plays an important role in ensuring, in combination with mortar, the correct exchange of moisture between the interior and exterior of the building.

The use of a composition according to any of the embodiments of the present invention therefore makes it possible to obtain mortars capable of combining an effective capacity to combat humidity and capillary rise with optimal anti-mould and anti-bacterial properties, at a low cost and at the same time guaranteeing aesthetic appeal. Their application therefore translates not only into effective protection, but also into a healthier and more durable environment.

They therefore form the subject matter of the invention:
- a composition for the production of mortar, comprising:
   - a cement binding compound in an amount by weight, determined with respect to the total weight of the composition, of between 38% and 42%, a granular aggregate in an amount by weight, determined with respect to the total weight of the composition, of between 58% and 63%;
      or
   - a cement binding compound in an amount by weight, determined with respect to the total weight of the composition, between 1% and 4% and a granular aggregate in an amount by weight, determined with respect to the total weight of the composition, between 96% and 99%;
      or
   - a cement-binding compound in an amount by weight, determined with respect to the total weight of the composition, of between 8% and 12% and a granular aggregate in an amount by weight, determined with respect to the total weight of the composition, of between 88% and 92%;
   and optionally,
   - a mixture of additives in an amount by weight, determined with respect to the total weight of the composition, between 0.02% and 0.12%, wherein said mixture of additives comprises or consists of one or more fluidifying agents and/or one or more antifreeze agents;
      - a process for producing a mortar comprising at least one step of mixing a composition according to any of the forms of realisation described herein with an aqueous solvent, in particular water;
      - a mortar obtainable by a process according to any of the forms of manufacture described herein; and
      - The use of a mortar according to any of the embodiments described herein on a surface of a substrate, (i) to provide a coating or decorative application on said substrate, and/or (ii) to prevent or reduce the risk of formation of microorganisms, in particular mould or bacteria, on said substrate, and/or (iii) to prevent or reduce the risk of formation of moisture on or through said substrate, and/or (iv) to prevent or reduce the risk of capillary rise of water through said substrate.

Further features and advantages of the various aspects of the present invention will become apparent in the following detailed description of the preferred forms of its realisation.

The preferred forms of embodiment of the invention described herein are intended as illustrative of certain aspects of the invention and should therefore not be considered as limiting the scope of protection of the invention.

### Brief description of the figures

The present invention and the following detailed description of its preferred forms of realisation can be better understood in the light of the following figures:
Figure 1. Diffractogram of the cement-binding compound present in a composition according to a first embodiment of the invention.
Figure 2. Light microscope images of the particle size fractions of a granular aggregate in the composition according to said first form of realisation.
Figure 3. Diffractogram of the particle size fraction between 500-250 µm of the granular aggregate in the composition according to said first form of realisation.
Figure 4. Diffractogram of the particle size fraction between 250-125 µm of the granular aggregate in the composition according to said first form of realisation.
Figure 5. Thermogravimetric analysis of the composition according to said first form of realisation.

### Detailed description

### Glossary

Unless otherwise indicated, all technical and scientific terms used in this description have the meaning commonly used in the technical field to which the invention belongs.

In the context of the present invention, the term *'calcite'* is understood to mean calcium carbonate (CaCO₃₎ , a mineral occurring in almost all sedimentary rocks, especially in carbonate allochymic rocks such as limestones and dolomites, as well as in effusive magmatic rocks such as basalts and all their respective metamorphic rocks.

In the context of the present invention, the term *"alite"* is intended as a synonym for *"tricalcium silicate",* the chemical formula of which is Ca₃SiO₍₅₎₍3CaO-SiO₂) and is one of the main constituents of Portland clinker. As is well known to a cement engineer, in the context of cement chemistry the term *'alite'* can also be referred to by the simplified formula 'C_{(3)S}' for brevity.

In the context of the present invention, the term *"belite"* is understood to be a synonym for dicalcium silicate, the chemical formula of which is Ca₂SiO₍₄₎₍2CaO-SiO₂) and is one of the main constituents of Portland cement clinker . As is well known to a cement chemist, the term *"belite"* may also be referred to by the simplified formula "C_{(2)S}" for brevity.

In the context of the present invention, the term *"portlandite"* means a mineral containing hydroxides typically belonging to the class of oxide minerals. In particular, the term *"portlandite"* is used in the present description and claims as a synonym for calcium hydroxide (Ca(OH)₂) or hydrated lime, also referred to in the context of cement chemistry by the simplified formula "CH".

In the context of the present invention, the terms *"quartz sand"* and *"quartz sand"* are used as synonyms and preferably refer to a type of sand, i.e., an inert granular material, obtained by crushing quartzite-containing rocks extracted from quartzite deposits, sandstone quarries or quarries of volcanic origin, and consisting predominantly of calcite and quartz. This type of sand can be sorted by grain size through a dry screening process.

In the context of the present invention, the term *"particle size"* refers to the property that identifies the individual particles comprising a granular aggregate according to any one of the variants described herein based on average size. In other words, anywhere in the present description and claims the term *"particle* size" refers to the average size or diameter of the individual particles comprising a granular aggregate. Thus, anywhere in the present description and claims, the term *"particle size"* may be replaced by *"average size"* or *"average diameter".*

Particle size can be determined by any of the separation and/or particle size characterisation techniques known in the industry, such as sieving, sedimentation, optical microscopy, electron microscopy, laser diffraction or a combination thereof.

In a preferred form of realisation, the term *'particle size'* as used herein refers to the average size or diameter of the individual particles constituting a granular aggregate according to any of the variants described herein, such as quartz sand, determined by means of optical microscopy. Using image analysis software, it is possible to automatically characterise the average size and shape of particles.

The term *"breathable",* when used with reference to a mortar according to any of the forms of construction described herein or to a coating or decorative application obtained from a mortar according to any of the forms of construction described herein, refers to the breathability property of said mortar or coating or decorative application, i.e., the permeability to vapour, and the ability to limit or prevent moisture from being retained on, in or through a substrate to which it is applied.

The term *"impermeable"* used with reference to a mortar according to any of the forms of construction described herein, or to a coating or decorative application obtained from a mortar according to any of the forms of construction described herein, refers to the ability to prevent the passage of liquid, and in particular water, onto the surface of or through a substrate to which it is applied.

The term *'glass fibres'* is used to denote glass spun to diameters of less than a tenth of a millimetre. Glass fibres, after spinning, lose the characteristic brittleness of glass to become a material of high mechanical strength and resilience and are effectively used for the production of composite materials, i.e. advanced structural materials in which various components are integrated with each other to produce a material of superior characteristics from a physical, mechanical, chemical, aesthetic *etc.* point of view. In the context of the present invention, reference will be made in particular to *"glass fibre pigments"* which enable more compact mortar compositions to be obtained.

At any point in this description and in the claims, the terms "comprising" or "includes" may be replaced by the terms "consists of" or "is composed of".

Various forms of embodiment of the invention will be described below. It is to be understood that the features of the different forms of embodiment described herein may be combined where compatible. In general, subsequent forms of realisation will only be described with reference to the differences from the previously described forms.

As mentioned, a first aspect of the present invention is a composition for the production of mortar, comprising:
- a cement binding compound in an amount by weight, determined with respect to the total weight of the composition, of between 38% and 42%, a granular aggregate in an amount by weight determined with respect to the total weight of the composition, of between 58% and 63%;
   or
- a cement binding compound in an amount by weight, determined with respect to the total weight of the composition, of between 1% and 4% and a granular aggregate in an amount by weight, determined with respect to the total weight of the composition, of between 96% and 99%, particularly suitable as a levelling compound for interior and exterior use, but also for plastering;
   or
- a cement binding compound in an amount by weight, determined with respect to the total weight of the composition, of between 8% and 12% and a granular aggregate in an amount by weight, determined with respect to the total weight of the composition, of between 88% and 92%, particularly suitable for plastering.

In a preferred embodiment according to the invention, the composition according to any of the variants described herein further comprises a mixture of additives in an amount by weight, determined with respect to the total weight of the composition, of between 0.02% and 0.12%.

The mixture may comprise or consist of one or more fluidising agents, one or more antifreeze agents, one or more super-plasticising agents, one or more reducing agents, or any other adjuvant for mortars commonly used in the industry.

In a particularly preferred embodiment, said mixture of additives comprises at least one or more fluidising agents and/or one or more antifreeze agents, even more preferably comprises or consists of one or more fluidising agents and one or more antifreeze agents.

Advantageously, the composition according to any of the forms of realisation described here may further include glass fibre, particularly in the form of glass fibre pigments.

Preferably, the respective quantities by weight of the cement binding compound, the granular aggregate and the admixture in the composition are such that their sum is equal to 100 per cent by weight of the composition.

In one aspect of the invention, the ratio of said cement bonding compound to said granular aggregate in the composition is 1:1.5, more precisely it is 1:1.53.

### Cement binding compound

In a preferred aspect of the invention, the cementitious binder compound usable in a composition according to any of the variants described herein is a material which, when mixed with water, is capable of developing adhesive properties or hydraulic properties. According to an embodiment, the cementitious binder compound may comprise one or more types of cements known in the building and construction industry, and in particular comprises calcite, alite, belite and portlandite as majority components.

In one aspect, this cement-binding compound comprises one or more cements commonly used in the construction industry, such as Portland cement (type I), composite Portland cement (type II), blast furnace slag cement (type III), pozzolanic cement (type IV), composite cement (type V) obtained by the simultaneous addition of Portland cement clinker, blast furnace slag and pozzolanic material, or combinations thereof.

In a preferred embodiment of the composition according to the present invention, said cement binding compound is present in an amount by weight, determined with respect to the total weight of the composition, of 40.03% ± 1.6.

### Granular aggregate

The granular aggregate that may be used in a composition according to any of the variants described herein is preferably an inert granular material, in particular it may be any inert granular material generally used in construction, building or infrastructure, which may be siliceous, calcareous, or basaltic in nature, as well as spherical, crumbled or crushed.

Such granular aggregate may be natural, industrial and/or recycled. Examples of natural granular aggregates are aggregates of mineral origin that may have been subjected to processes of a mechanical nature; industrial granular aggregates, on the other hand, comprise materials of mineral origin resulting from industrial manufacturing processes, involving, for example, a heat treatment process of the selected material.

In an embodiment of the invention, said granular aggregate is a mineral granular material, preferably quartz sand.

According to a particularly preferred aspect of the invention, said granular aggregate, in particular in the form of quartz sand, comprises or consists of particles of a "fine" nature, i.e. particles having a particle size in the range between 125 µm and 1000 µm. In other words, the particles comprising the granular aggregate present in the composition according to the invention preferably have an average size or diameter in the range between 125 µm and 1000 µm. This particle size is particularly preferred as it allows optimal performance in terms of breathable properties of the resulting mortar to be achieved.

In an embodiment of the invention, the composition according to any of the embodiments described herein comprises a granular aggregate, particularly in the form of quartz sand, having a specific particle size distribution, and more specifically comprising:
- a fraction of particles with a particle size greater than 1000 µm, in an amount by weight, determined in relation to the total weight of the aggregate, of 0.05% ± 0.03;
- a particle size fraction between 500 and 1000 µm, in an amount by weight, determined in relation to the total weight of the aggregate, of 6% ± 0.3;
- a particle size fraction between 250 and 500 µm, in an amount by weight, determined in relation to the total weight of the aggregate, of 26.6% ± 0.7;
- a particle size fraction between 125 and 250 µm, in an amount by weight, determined in relation to the total weight of the aggregate, of 27.1% ± 0.5; and
- a particle size fraction of less than 125 µm, in an amount by weight, determined with respect to the total weight of the aggregate, of less than 0.2%.

As previously mentioned, the particle size of a granular aggregate according to any of the variants described herein can be determined using any of the particle size separation techniques known to a branch technician, and preferably is determined using optical microscopy techniques.

According to a particularly preferred aspect of the present invention, the granular aggregate according to any one of the variants described herein is present in the composition in a determined amount by weight with respect to the total weight of said composition, equal to 59.9% ± 1.55.

### Mixture of additives

According to a preferred aspect of the invention, the composition according to any of the variants described herein comprises a mixture of additives comprising or consisting of one or more fluidising agents and one or more antifreeze agents.

Preferably, said one or more fluidizing agents are present in the additive mixture in an amount by total weight of fluidizing agent(s), determined with respect to the total weight of said additive mixture, of between 90% and 95%, in particular amounting to about 93% by weight, while said one or more antifreeze agents are present in the additive mixture in an amount by total weight of antifreeze agent(s), determined with respect to the total weight of said additive mixture, of between 5% and 10%, in particular amounting to about 7% by weight.

The use of the aforementioned additives may favour the development of chemical bonds during the mixing process of the composition with water, thus modulating the physical-chemical characteristics of the resulting mortar to be obtained.

### Embodiments of the composition

As already mentioned, the authors have found that the use of a composition according to any of the embodiments described herein makes it possible to obtain the production of a mortar for application in the field of building, renovation or construction which has an excellent ability to prevent moisture phenomena and capillary rise of water through a substrate, in particular a wall of a building. Advantageously, by increasing or decreasing the quantities of the selected components in the composition according to any of the embodiments described herein, albeit always within the quantities, i.e. the percentage ranges indicated in this description and in the claims, it is possible to modulate the physical-mechanical properties of the mortars thus obtained, while maintaining their excellent performance in terms of moisture prevention and capillary rise properties and ability to counteract the formation of micro-organisms, such as mould and bacteria.

In other words, the exact quantity of the cement binder, granular aggregate and admixture mixture can be changed within the concentration ranges indicated in this description and in the claims, depending on the type of mortar to be obtained and the final product or application to be made. These quantities affect the type of workability to be performed to make the product.

However, when cement binder or aggregate are used in quantities other than those identified here, it has been noted that the stability and workability of the mortar, as well as the yield of the final product, are compromised. For example, when a thick décor (approx. 3 cm) is to be realised, the quantity of cement binder and aggregate should remain within the indicated ranges (granular aggregate between 96 and 99% and cement binder between 1% and 4%), otherwise the final décor will show cracks.

The composition according to any of the embodiments described herein may further comprise one or more additional auxiliary compounds, e.g. selected from dyes, preferably breathable dyes, oxides, or essences, anti-shrinkage agents, retarding agents and/or waterproofing agents.

The composition according to any of the forms of realisation described herein is preferably a solid composition, particularly in powder or granulate form.

In a particularly preferred form of realisation, this composition comprises the following qualitative/quantitative formulation:
- a cement binding compound according to any of the variants described herein, in an amount by weight, determined with respect to the total weight of said composition, of 40.03% ± 1.6; in particular wherein said cementitious binding compound comprises at least calcite, alite, belite and portlandite;
- granular aggregate, e.g. quartz sand, in an amount by weight, determined with respect to the total weight of said composition, of 59.9% ± 1.55; in particular wherein said quartz sand has a particle size between 125 and 1000 µm and even more particularly has a particle size distribution as defined above in this description; and
- a mixture of additives comprising or consisting of one or more fluidifying agents and one or more antifreeze agents, wherein the total weight quantity of said mixture of additives, determined with respect to the total weight of said composition, is 0.07% ± 0.05; preferably wherein said one or more fluidifying agents constitute, by weight, 93.2% of the total weight of said mixture of additives while said one or more antifreeze agents constitute, by weight, 6.8% of the total weight of said mixture of additives.

According to another embodiment of the invention, the composition comprises the following qualitative/quantitative formulation:
- a cement binding compound according to any of the variants described herein, in an amount by weight, determined with respect to the total weight of said composition, of about 2%; in particular wherein said cementitious binding compound comprises at least calcite, alite, belite and portlandite;
- granular aggregate, e.g. quartz sand, in an amount by weight, determined with respect to the total weight of said composition, equal to 98%; in particular in which said quartz sand has a particle size between 125 and 1000 µm and even more particularly has a particle size distribution as defined above in this description; and
- a mixture of additives comprising or consisting of one or more fluidifying agents and one or more antifreeze agents, wherein the total weight quantity of said mixture of additives, determined with respect to the total weight of said composition, is 0.07% ± 0.05; preferably wherein said one or more fluidifying agents constitute, by weight, 93.2% of the total weight of said mixture of additives while said one or more antifreeze agents constitute, by weight, 6.8% of the total weight of said mixture of additives.

According to another embodiment of the invention, the composition comprises the following qualitative/quantitative formulation:
- a cement binding compound according to any of the variants described herein, in an amount by weight, determined with respect to the total weight of said composition, of about 10%; in particular wherein said cementitious binding compound comprises at least calcite, alite, belite and portlandite;
- granular aggregate, e.g. quartz sand, in an amount by weight, determined with respect to the total weight of said composition, of approximately 90 %; in particular, in which said quartz sand has a particle size between 125 and 1000 µm and even more particularly has a particle size distribution as defined above in this description; and
- a mixture of additives comprising or consisting of one or more fluidifying agents and one or more antifreeze agents, wherein the total weight quantity of said mixture of additives, determined with respect to the total weight of said composition, is 0.07% ± 0.05; preferably wherein said one or more fluidifying agents constitute, by weight, 93.2% of the total weight of said mixture of additives while said one or more antifreeze agents constitute, by weight, 6.8% of the total weight of said mixture of additives.

It is also an object of the present invention to use a composition according to any of the embodiments described herein for the production of mortar, which use includes mixing said composition with an aqueous solvent. In a particularly preferred aspect, said aqueous solvent is water.

The present invention also provides a process for producing a mortar, wherein the process comprises at least one step of mixing a composition according to any one of the variants described herein with an aqueous solvent, preferably with water. Such mixing is preferably carried out in such a way as to obtain a substantially fluid, mouldable mortar.

According to a preferred aspect of the invention, in said mixing step, the aqueous solvent is added to the selected composition in an amount by weight of at least 30% of the total weight of the composition. In other words, the total mixing solvent content of the composition to be used is calculated to the extent of about 30% by weight of the total weight of the composition.

By way of example only, 300 ml of water may be added to a composition according to the invention of 1 kg. Alternatively, said aqueous solvent, preferably water, is added to the composition of the invention in an amount of between 0.5% and 50% of the total weight of the composition.

As a person skilled in the art knows, the quantity of water to be used for the production of the mortar, i.e. for the dilution of a composition according to any of the variants described herein, may be varied according to the time of year, according to the surface selected and therefore according to the temperature of said surface and the external temperature (e.g. interior walls of a building or exterior walls exposed to the sun), the type of humidity affecting the wall to which the product is to be applied (e.g. a wet or dry surface), and the type of decoration or motif desired on the selected surface.

Preferably, the required amount of aqueous solvent is introduced into a suitable vessel into which the composition of the invention is then placed under suitable agitation. The conglomerate thus obtained can then be used to make the desired product.

The mixing of the composition with water can be done in a bucket and/or by means of a kneader according to any of the common methods known to a technician in the trade.

According to a further aspect of the invention, this mixing step is carried out using a mechanical mixer for a sufficient time to obtain fluidisation of the mixture, preferably for a duration of 1 to 3 minutes, and still preferably at a temperature between 5 and 28°C.

The procedure described herein may further include a step that involves the addition of one or more auxiliary compounds of your choice from resins, breathable dyes, oxide essences, e.g. to impart the desired colouring to the resulting mortar.

The addition of one or more of these auxiliary compounds may take place during the mixing step of the composition according to the invention with water, or may take place in an independent step preceding said mixing step, for example by direct addition of the selected compound within the composition or the aqueous solvent to be used, or in an independent step subsequent to said mixing step.

A mortar obtainable by a process according to any of the embodiments described herein is also an object of the present invention.

Such mortar is particularly mouldable, i.e. it has a low resistance to deformation, and exhibits behaviour similar to that of a viscous fluid.

The mortar obtainable from a composition according to any of the embodiments described herein is breathable, waterproof and anti-mould, and in particular is capable of preventing and/or reducing the risk of the formation of micro-organisms, such as mould or bacteria, on the surface of a substrate to which it is applied as well as preventing and/or reducing the risk of the development of dampness or capillary rise through said substrate.

In other words, as will be illustrated in more detail below, mortar in any of the forms described herein may be used to create coatings and/or decorative applications on the surface of any substrate of interest in the building and construction industry that are breathable, impermeable and prevent and/or reduce the risk of the formation of micro-organisms, such as mould or bacteria, as well as the development of moisture or capillary rise through said substrate.

A further aspect of the present invention is thus represented by a process for producing coatings and/or decorative applications on the surface of a substrate, comprising at least one step in which a mortar according to any of the embodiments described herein is directly applied or distributed on said surface, for example in such a way as to partially or totally cover said surface or in such a way as to produce or realise a predefined decoration, pattern or decorative pattern. By way of example, it is noted that the composition comprising a cementitious binder compound between 38% and 42% and a granular aggregate between 58% and 63% was found to be particularly suitable for the realisation of fine or low thickness decorations (from 1 mm to 1 cm), the composition comprising a cementitious binder compound between 1% and 4% and a granular aggregate between 96% and 99% was found to be particularly suitable as a skim coat for interior and exterior use but also for plastering up to thicknesses from 2 mm to 3 cm and therefore also for high thickness decorations, while the composition comprising a cement-binding compound between 8% and 12% and a granular aggregate between 88% and 92% was particularly suitable for plastering, especially when applied with a multi-coat plastering machine, and also for plastering mesh (2 mm to 120 mm thick).

**The** process for preparing the compositions of the invention may also comprise a further step, in which the mortar applied or distributed on the surface of the selected substrate is treated or coated with a resin or colouring compound of choice from those commonly used in the art, in particular with a breathable resin or colouring compound. This allows the surface to be imparted with a special colouring.

An embodiment of the present invention relates in particular to a process for producing a decorative coating and/or application on the surface of a substrate, comprising the following steps:
a. mixing a composition according to any of the embodiments described herein with an aqueous solvent, preferably water, to produce a mortar;
b. depositing, distributing, applying and/or modelling the mortar obtained in step a. on the surface of said substrate in such a way as to obtain said decorative coating and/or application, in particular to obtain a predefined decoration, motif or pattern.

The amount of aqueous solvent, preferably water, that can be used in step a. of the above-described procedure may vary depending on the type of coating or decorative application desired, e.g. it may vary in a range as previously mentioned in this description.

As mentioned above, depending on the type of coating or decorative application to be realised, as well as depending on the substrate selected, an expert in the field will be able to assess the amount of aqueous solvent to be added to any of the compositions according to the present invention to obtain a mortar having the desired properties.

Thus, the mortar obtained by mixing a composition according to any of the variants described herein with an aqueous solvent, preferably water, can be modelled in such a way as to obtain the coating or decoration having the desired shape and size.

Depending on the type of coating or decorative application to be achieved, the mortar obtained in step a. of the above-described procedure may either be placed inside a suitable container or alternatively deposited on a specific surface of the selected substrate and then left to harden to obtain the aforementioned coating or decorative application.

By way of example only, if said substrate is a wall of a building, said mortar may be distributed over the surface of the wall using a single mortar distribution step.

It is also an object of the present invention to use a mortar according to any of the embodiments described herein for:
(i) making or producing a coating and/or decorative application on said substrate, for example by a process according to any of the variants exemplified herein; and/or
(ii) treat, prevent or reduce the risk of micro-organisms, in particular mould or bacteria, forming on that substrate; and/or
(iii) prevent or reduce the risk of moisture build-up on or across said substrate or the surface of said substrate; and/or
(iv) prevent or reduce the risk of capillary rise of water through said substrate or the surface of said substrate.

**The** mortar may be applied to the surface of the selected substrate in a quantity sufficient to partially or completely cover said surface or such that a desired motif, pattern or decorative pattern can be formed.

Preferably, this mortar is applied or distributed on the surface of the selected substrate in such a way as to form a coating between 1 mm and 3 cm thick.

In one aspect, mortar according to any of the forms of realisation described herein may thus be used to make or produce a moisture-proof, waterproof and/or breathable coating and/or application on said substrate.

In a further aspect, mortar according to any of the forms of realisation described herein may be used to make or produce a decorative anti-mould coating and/or application on said substrate.

In a further aspect, mortar according to any of the embodiments described herein may be used to make or produce a coating and/or decorative application on said substrate, which is capable of preventing or reducing the risk of capillary rise of water through said substrate or the surface of said substrate.

The mortars of the present invention can be used to treat or produce coatings and/or decorative applications on the surface of any substrate of interest in the building, renovation and construction industry. In particular, said substrate may be selected from interior or exterior walls of any type of building, a floor, a shower tray, such as a resin shower tray, or a kitchen worktop.

Preferably, this substrate is an internal or external wall of a building.

This substrate may in particular comprise or consist of any material known in the construction industry, such as concrete, wood, plaster, mortar, cement, quartz, water-based or enamel paints, resin, plastic, ceramic materials preferably excluding flooring.

If the substrate in a material according to any of the variants exemplified above, and in particular a wall, is particularly deteriorated, it will be preferable to scrape off the deteriorated material using 160 g glass fibre mesh and apply a layer of adhesive before proceeding with the application of the decorative mortar. This will prevent the deteriorated material from being isolated following the application of the mortar.

Examples are given below to better illustrate some forms of embodiment of the present invention; these examples are in no way to be considered as limiting the foregoing description and subsequent claims.

### Example 1

A composition was prepared for the production of mortar with the following composition:
- 40.03% w/w ± 1.6 of cement binding compound
- 59.9% w/w ± 1.55 quartz sand
- 0.07 % w/w ± 0.05 of a mixture of additives (93.2 %p fluidifying agents; 6.8 %p antifreeze).

From this composition, a particle size separation was carried out in triplicate. The fractions thus separated were subsequently analysed by X-ray diffraction to determine their exact mineralogical nature. A solvent extraction was performed on the fine fraction to subsequently determine the nature of the additives by gas-chromatographic analysis coupled with mass spectrometry.

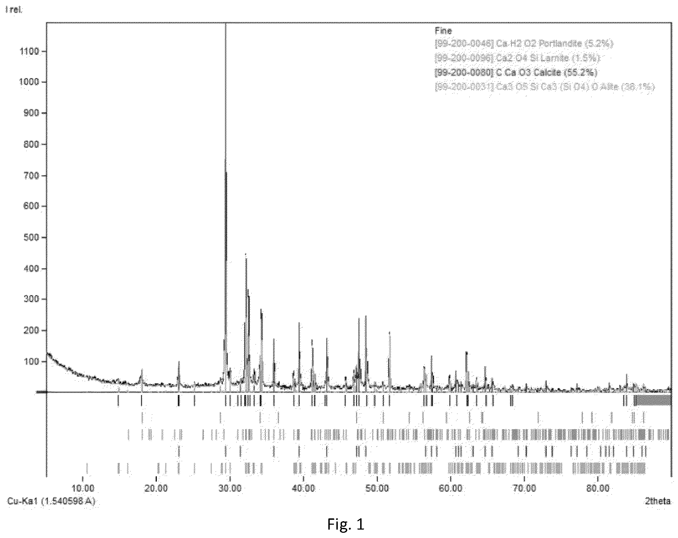

On X-ray diffraction, the binding compound exhibits a composition typical of a cementitious binder as it consists predominantly of calcite [CaCO_{(3) ]}, alite [C_{(3) S}, 2CaO-SiO_{(2) ]}, belite [C_{(2) S}, 2CaO-SiO₂] and portlandite [Ca(OH)₂] (Figure 1).

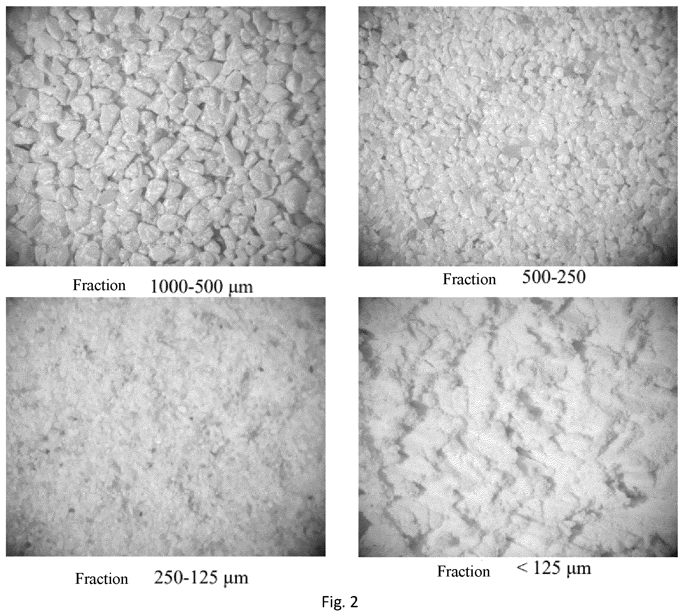

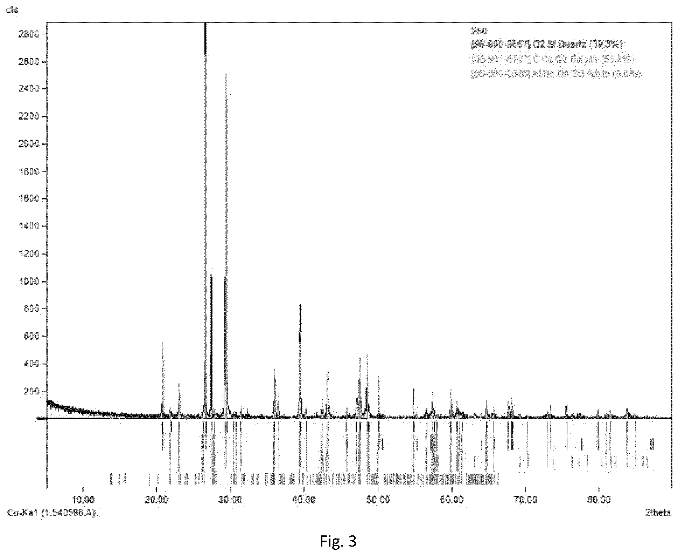

The aggregate is quartz sand, consisting mainly of calcite and quartz (Figures 2-4), with a grain size ranging from 1,000 µm to 125 µm as distributed below:
- > 1000 µm: 0.05% w/w ± 0.03
- 1000-500 µm: 6% w/w ± 0.3
- 500-250 µm: 26.6% w/w ± 0.7
- 250-125 µm: 27.1% w/w ± 0.5
- < 125 µm: < 0.2 % w/w.

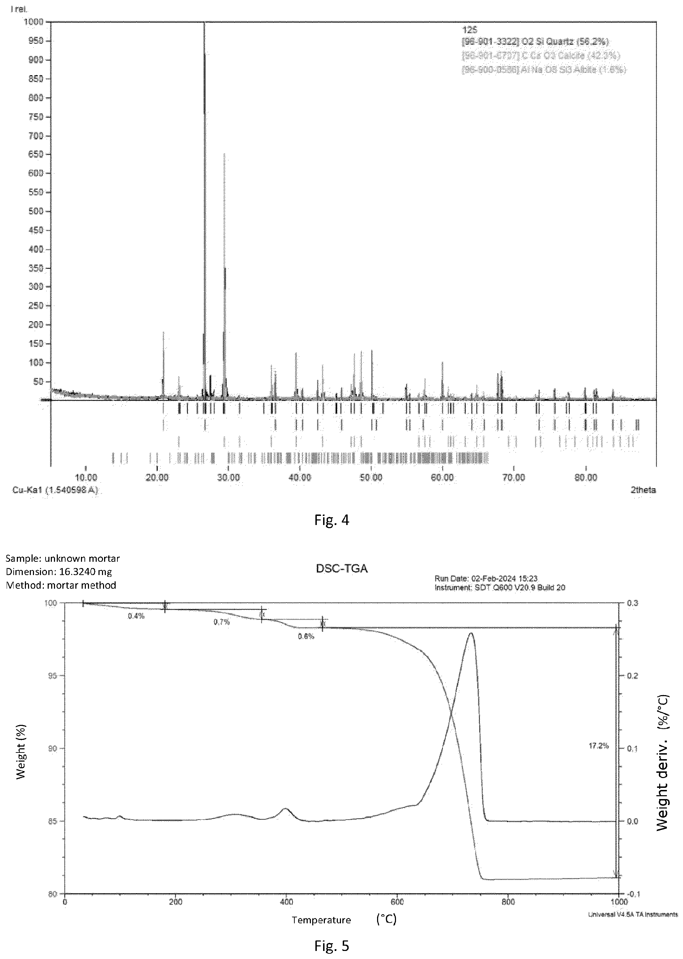

Thermogravimetric analysis of the as-is product (Figure 5) reveals an aggregate binder ratio of 1/1.53.

The composition was mixed with water in an amount equal to 30% by weight of the total weight of the composition in order to obtain a substantially fluid and mouldable mortar.

Tests of the application of the resulting mortar on the surface of substrates made of different materials, including wood, showed a surprising anti-mould and anti-humidity capacity of the mortar, together with an optimal ability to prevent capillary rise of water through the tested surfaces.

In another test, increasing amounts of glass fibre, in particular glass fibre pigments, were added to the composition of *Example 1*. The resulting material is firmer and more compact.

### Example 2

A composition was prepared for the production of mortar with the following composition:
- approx. 2% w/w cement binding compound
- approx. 98% w/w quartz sand
- 0.07 % w/w ± 0.05 of a mixture of additives (93.2 %p fluidifying agents; 6.8 %p antifreeze).

The composition was mixed with water in an amount equal to 30% by weight of the total weight of the composition in order to obtain a substantially fluid and mouldable mortar.

Tests of the application of the resulting mortar on the surface of substrates made of different materials, including wood, showed a surprising anti-mould and anti-humidity capacity of the mortar, together with an optimal ability to prevent capillary rise of water through the tested surfaces.

The composition of *Example 2* proved particularly effective as a skim coat for interior and exterior use, with thicknesses between 2 mm and 3 cm. The skim coat was advantageously fireproof.

The composition of *Example 2* was also suitable for plastering and the application of plaster fibre mesh, but can also be used for fine skimming only. For maximum performance, a finish with non-plaster-based materials and paints that are breathable or materials that are lime-based was used. It is also recommended that deteriorated material be removed from the walls to be treated prior to application of the composition of the invention and that insulation be applied.

In another test, increasing amounts of glass fibre, in particular glass fibre pigments, were added to the composition of *Example 2.* The resulting material is firmer and more compact.

### Example 3

A composition was prepared for the production of mortar with the following composition:
- approx. 10% w/w cement binding compound
- approx. 90 % w/w quartz sand
- 0.07 % w/w ± 0.05 of a mixture of additives (93.2 %p fluidifying agents; 6.8 %p antifreeze).

As in the previous examples, the bonding compound exhibits on X-ray diffraction a composition typical of a cementitious bonding agent as it consists predominantly of calcite [CaCO_{(3) ]}, alite [C_{(3) S}, 2CaO-SiO_{(2) ]}, belite [C_{(2) S}, 2CaO-SiO₂] and portlandite [Ca(OH)₂] (Figure 1). The aggregate is a quartz sand, consisting mainly of calcite and quartz (Figures 2-4), with a grain size ranging from 1000 µm to 125 µm.

The composition was mixed with water in an amount equal to approximately 30% by weight of the total weight of the composition in order to obtain a substantially fluid and mouldable mortar.

Tests of the application of the resulting mortar on the surface of substrates made of different materials, including wood, showed a surprising anti-mould and anti-humidity capacity of the mortar, together with an optimal ability to prevent capillary rise of water through the tested surfaces.

The composition is fully breathable, non-synthetic, and can be applied on all types of surfaces, from 2 mm up to 120 mm thick.

The resulting material is suitable for plastering, particularly when applied with a multi-coat plastering machine, and can also be used for plaster mesh. Where there is a damp surface with rising damp or mould, the material remains totally breathable, effectively eliminating moisture.

Instructions for use: Depending on the use, rock decoration or levelling for rising or dampness, find the right consistency by mixing well with water. For shaving for rising or dampness the material should be softer, where it will be used for decoration, the material should be harder and more homogeneous. The percentage of water can be dosed according to the application.

In another test, increasing amounts of glass fibre, in particular glass fibre pigments, were added to the composition of *Example 3.* The resulting material is firmer and more compact.

## Claims

1. Composition for the production of mortar, comprising:
- a cement binding compound in an amount by weight, determined with respect to the total weight of the composition, of between 38% and 42% and a granular aggregate in an amount by weight, determined with respect to the total weight of the composition, of between 58% and 63%;
or
- a cement binding compound in an amount by weight, determined with respect to the total weight of the composition, between 1% and 4% and a granular aggregate in an amount by weight, determined with respect to the total weight of the composition, between 96% and 99%;
or
- a cement binding compound in an amount by weight, determined with respect to the total weight of the composition, of between 8% and 12% and a granular aggregate in an amount by weight, determined with respect to the total weight of the composition, of between 88% and 92%;
and optionally,
- a mixture of additives in an amount by weight, determined with respect to the total weight of the composition, of between 0.02% and 0.12%,
in which said mixture comprises at least one or more fluidifying agent(s) and/or one or more antifreeze agent(s) and in which said cement-binding compound comprises calcite, alite, belite and portlandite

2. Composition according to claim 1, wherein said composition further comprises glass fibre, preferably glass fibre pigments.

3. Composition according to claim 1 or 2, wherein said granular aggregate is quartz sand.

4. Composition according to any one of claims 1 to 3, wherein said granular aggregate comprises particles having a particle size in the range from 125 µm to 1000 µm.

5. Composition according to any one of claims 1 to 4, wherein said granular aggregate comprises:
- a fraction of particles with a particle size greater than 1000 µm, in an amount by weight, determined in relation to the total weight of the aggregate, of 0.05% ± 0.03;
- a particle size fraction between 500 and 1000 µm, in an amount by weight, determined in relation to the total weight of the aggregate, of 6% ± 0.3;
- a particle size fraction between 250 and 500 µm, in an amount by weight, determined in relation to the total weight of the aggregate, of 26.6% ± 0.7;
- a particle size fraction between 125 and 250 µm, in an amount by weight, determined in relation to the total weight of the aggregate, of 27.1% ± 0.5; and
- a particle size fraction of less than 125 µm, in an amount by weight, determined with respect to the total weight of the aggregate, of less than 0.2%.

6. Composition according to any one of claims 1 to 5, wherein said one or more fluidizing agents are present in an amount by weight, determined with respect to the total weight of the additive mixture, of between 90 and 95%, in particular amounting to about 93% by weight; and wherein said one or more antifreeze agents are present in an amount by weight, determined with respect to the total weight of the additive mixture, of between 5 and 10%, in particular amounting to about 7% by weight.

7. Composition according to any one of claims 1 to 6, wherein the composition comprises:
- a cement binding compound in an amount by weight, determined with respect to the total weight of said composition, of 40.03% ± 1.6;
- quartz sand in an amount by weight, determined with respect to the total weight of said composition, of 59.9% ± 1.55, wherein said quartz sand has a grain size as defined in claims 4 or 5;
- a mixture of additives comprising or consisting of one or more fluidising agents and one or more anti-freezing agents, wherein the total weight quantity of said mixture of additives, determined with respect to the total weight of the composition, is 0.07% ± 0.05.

8. Composition according to any one of claims 1 to 7, further comprising at least one auxiliary compound selected from among dyes and essences, in particular oxide dyes.

9. A process for producing a mortar comprising at least one step of mixing a composition according to any one of claims 1 to 8 with an aqueous solvent, in particular water.

10. Process according to claim 9, wherein, in said mixing step, the aqueous solvent is added in an amount by weight of at least 30% of the total weight of said composition.

11. Mortar obtainable by a process according to any one of claims 9 or 10.

12. Use of a mortar according to claim 11 on a surface of a substrate, (i) to make a coating and/or decorative application on said substrate, and/or (ii) to treat, prevent or reduce the risk of formation of microorganisms, in particular mould or bacteria, on said substrate and/or (iii) to prevent or reduce the risk of formation of moisture on or through said substrate and/or (iv) to prevent or reduce the risk of capillary rise of water through said substrate.

13. Use according to claim 12, wherein said substrate is in a material selected from concrete, wood, plaster, mortar, cementitious, quartz, water-based or enamel paints, resin, plastic, ceramic materials, preferably wherein said substrate is an interior or exterior wall of a building.
